# EUROPÄISCHE PATENTSCHRIFT

(11) **EP 3 642 485 B1**
(45) Veröffentlichungstag und Bekanntmachung des Hinweises auf die Patenterteilung: **05.05.2021**
(21) Anmeldenummer: 18740581.6
(22) Anmeldetag: 12.07.2018
(51) Int. Cl.: F04B 1/04, F04B 15/02, F16J 15/00, F16J 15/44, F16J 15/56, F04B 53/14

(54) **DICHTUNG FÜR EINEN BETONPUMPENZYLINDER**
SEAL FOR A CONCRETE PUMP CYLINDER
SYSTÈME D'ÉTANCHÉITÉ POUR CYLINDRE DE POMPE À BÉTON

(30) Priorität: 13.07.2017 DE 102017115801
(43) Veröffentlichungstag der Anmeldung: 29.04.2020
(73) Patentinhaber: Liebherr-Components Kirchdorf GmbH, 88457 Kirchdorf (DE)
(72) Erfinder: HUMMEL, Stefan, 87730 Bad Grönenbach (DE)
(74) Vertreter: Laufhütte, Dieter
(86) Internationale Anmeldenummer: PCT/EP2018/068985
(87) Internationale Veröffentlichungsnummer: WO 2019/012056

(56) Entgegenhaltungen:
- EP-A1- 0 043 918
- CH-A- 458 857
- DE-A1- 2 204 162
- DE-A1- 3 905 777
- DE-A1- 4 329 211

## Beschreibung

Die Erfindung betrifft eine Betonpumpe mit einer Dichtung für deren Betonpumpenzylinder mit wenigstens einer Primärdichtung und wenigstens einer Sekundärdichtung.

Betonpumpenzylinder bzw. Zylinder-Kolbenvorrichtungen zum Pumpen von Beton werden beispielsweise auf Baustellen zum Pumpen von flüssigem Beton zu einem Einsatzort benutzt. Bekannterweise wird dabei Beton mittels einer entsprechenden Pumpe und eines Betonpumpenauslegers an eine gewünschte Stelle auf einer Baustelle gefördert.

Die Performance bzw. die Leistung entsprechender Betonpumpen kann anhand der Fördermenge und der Einsatzreichweite des Betonpumpenauslegers gemessen werden. Je leichter ein Mast des Betonpumpenauslegers gebaut werden kann, umso besser können die genannten Messgrößen ausfallen.

Jedes Gelenk des faltbaren Betonpumpenauslegers ist mit Hydraulikzylindern verbunden, welche maßgeblich das Gewicht und somit ebenfalls die Performance der Betonpumpe beeinflussen.

Entlang des Betonpumpenauslegers wird Beton mittels von Betonpumpenzylindern zur Baustelle befördert. Die Betonpumpenzylinder arbeiten dabei kontinuierlich und wechselweise, was oft zu hoher Wärmeentwicklung führt und damit einen vorzeitigen Verschleiß der Dichtsysteme der Betonpumpenzylinder zur Folge haben kann. Bei Dauerlauf des Hydraulikantriebs der Betonpumpe verschleißt diese sehr schnell, was zu Leckageproblemen bei gleichzeitig sehr hoher Wärmeentwicklung führen kann.

Aktuell werden gemäß dem Stand der Technik marktübliche Hydraulikzylinder mit Elastomerdichtungen eingesetzt, welche im Dauerbetrieb höhere Reibwerte und somit deutlich geringere Standzeiten aufweisen Ein Hydraulikzylinder mit einer bekannten Dichtung ist aus EP0043918 bekannt.

Vor diesem Hintergrund ist es Aufgabe der Erfindung, eine verbesserte Dichtung für Betonpumpenzylinder bereitzustellen, bei der der Verschleiß und das Ruckeln des Betonpumpenzylinders reduziert sind.

Diese Aufgabe wird erfindungsgemäß durch eine Betonpumpe mit den Merkmalen des Anspruchs 1 gelöst. Vorteilhafte Ausgestaltungen sind Gegenstand der Unteransprüche. Demnach ist eine Dichtung für einen Betonpumpenzylinder vorgesehen, mit wenigstens einer Primärdichtung und wenigstens einer Sekundärdichtung, wobei die Primärdichtung eine mechanische Spaltdichtung ist. Der Begriff des Betonpumpenzylinders kann vorliegend eine entsprechende Zylinder-Kolbenvorrichtung beschreiben.

Durch den Einsatz einer mechanischen Spaltdichtung werden durch Reibungsoptimierung des Dichtsystems und durch gewollten, definierten Leckölfluss die Standzeit des Dichtsystems und das Temperaturverhalten positiv beeinflusst.

Die eingesetzte mechanische Spaltdichtung kann entsprechend der Einsatzanforderungen bzw. der sonstigen Betonpumpenparameter ausgelegt sein und es kann dabei durch entsprechende Auswahl bzw. Dimensionierung der Spaltdichtung die zu erwartende bzw. die benötige Leckölmenge festgelegt sein.

In einer bevorzugten Ausführung der Erfindung ist denkbar, dass die Spaltdichtung eine schwimmende Spaltdichtung ist. Die Ausführung als schwimmende Spaltdichtung ermöglicht eine Reibungsreduzierung zwischen den beteiligten Komponenten. Die Gleitpaarung der Kolbenstange mit der schwimmenden Spaltdichtung beschädigt die Kolbenstange bei Berührung nicht.

In einer weiteren bevorzugten Ausführung der Erfindung ist denkbar, dass das Innere der Primärdichtung mit einer aus Bronze oder einer aus einem bronzeähnlichen Material gefertigten Auflage ausgeführt ist. Hierdurch kann vorteilhafterweise ein Schutz einer Kolbenstange zu einem Lager des Betonpumpenzylinders bereitgestellt werden.

In einer weiteren bevorzugten Ausführung ist denkbar, dass die Primärdichtung zwischen einer Kolbenstange und einer Führung angeordnet ist und dazu ausgebildet ist, sich zur Kolbenstange und nicht zur Führung insbesondere unter Druckbeaufschlagung zu zentrieren. Hierdurch kann vorteilhafter Weise eine optimale Lage der Kolbenstange zur Führung erlangt werden.

In einer besonders bevorzugten Ausführung der Erfindung ist denkbar, dass zwischen der Außenseite der Primärdichtung und der Innenseite der Führung ein Spalt, insbesondere ein Ringspalt, vorgesehen ist.

Dieser Ringspalt bzw. Spalt kann sicherstellen, dass die Primärdichtung zur Kolbenstange zentriert wird und in radialer Richtung nicht in übermäßigen Kontakt mit der Führung treten kann.

In einer weiteren bevorzugten Ausführung ist denkbar, dass zwischen der Primärdichtung und der Sekundärdichtung eine Leckageleitung vorgesehen ist. Über die Leckageleitung kann die definierte Leckölmenge abgeleitet und ggf. gereinigt und/oder wiederverwendet werden. Die Leckageleitung kann zwischen der Primärdichtung und der Sekundärdichtung auf eine die Kolbenstange führende Ausnehmung treffen und mit dieser kommunizieren. Die Leckageleitung kann insbesondere senkrecht zu dieser Ausnehmung angeordnet sein.

In einer weiteren bevorzugten Ausführung ist denkbar, dass die Sekundärdichtung in axialer Richtung des Betonpumpenzylinders zwischen der Primärdichtung und einem Abstreifer angeordnet ist. Der Abstreifer kann dabei diejenige Komponente der Dichtung sein, die in der genannten axialen Richtung am weitesten außen an der Führung angeordnet ist.

In einer weiteren bevorzugten Ausführung ist denkbar, dass die Primärdichtung wenigstens ein Dämpfungselement umfasst. Dass Dämpfungselement und insbesondere genau zwei Dämpfungselemente können an in axialer Richtung äußeren Bereichen der Primärdichtung angeordnet sein und insbesondere ein axiales und/oder radiales Spiel der Primärrichtung beeinflussen bzw. ermöglichen.

Weitere Einzelheiten und Vorteile der Erfindung sind anhand der in den Figuren beispielhaft gezeigten Ausführungen erörtert. Dabei zeigen:
- Figuren 1a-d:: unterschiedliche Stellungen einer Betonpumpe mit Betonpumpenausleger;
- Figur 2:: zwei Betonpumpenzylinder mit erfindungsgemäßen Dichtungen;
Figur 3: Schnittansicht einer erfindungsgemäßen Dichtung; und
Figur 4: detaillierte Schnittansicht einer erfindungsgemäßen Dichtung.

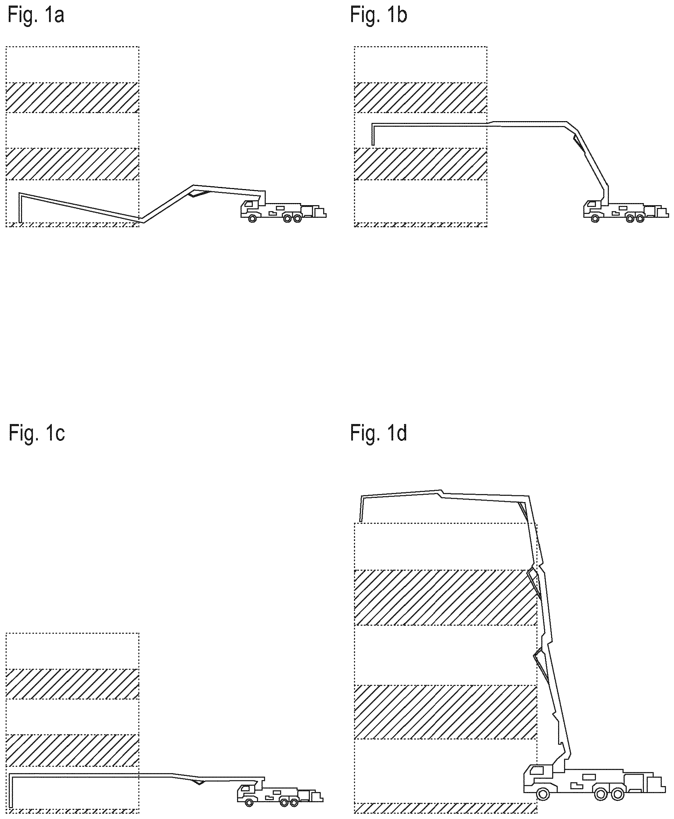

Figuren 1a- 1d zeigen eine Betonpumpe mit einem Betonpumpenausleger in unterschiedlichen Stellungen des Betonpumpenauslegers. Die Leistungsfähigkeit einer entsprechenden Betonpumpe kann in Abhängigkeit von der Fördermenge an Beton und in Abhängigkeit von der Einsatzreichweite des Betonpumpenauslegers bemessen werden, die mittels der Betonpumpe realisierbar sind.

Wie den Figuren zu entnehmen ist können besonders hohe und/oder besonders weit seitlich reichende Ausleger als entsprechend leistungsfähig eingestuft werden.

Figuren 1a und 1c zeigen Betonpumpen mit Betonpumpenauslegern, die so konfiguriert sind, dass eine möglichst große horizontale Auslage erreicht wird.

Figur 1b zeigt eine Betonpumpe mit einem Betonpumpenausleger, der so konfiguriert ist, dass Beton in einer mittleren Höhe und bei mittlerer horizontalen Auslage ausgebracht werden kann.

Figur 1d zeigt eine Betonpumpe mit einem Betonpumpenausleger, der so konfiguriert ist, dass Beton in einer großen Höhe und bei geringer horizontalen Auslage ausgebracht werden kann.

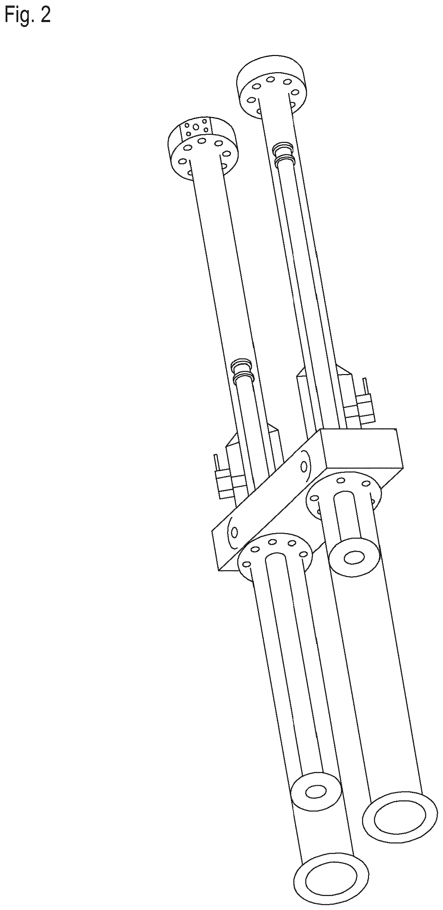

Figur 2 zeigt zwei Betonpumpenzylinder zum Fördern von flüssigem Beton, die jeweils wenigstens eine erfindungsgemäße Dichtung umfassen können. An wenigstens einem der Betonpumpenzylinder kann wenigstens ein Wegsensor vorgesehen sein, der beispielsweise die Position des Kolbens und/oder des Zylinders der Kolben-Zylindervorrichtung erfassen kann. Der Begriff des Betonpumpenzylinders ist vorliegend breit auszulegen und kann jegliche Kolben-Zylindervorrichtungen zum Fördern von Beton umfassen.

Die Betonpumpenzylinder können parallel zueinander angeordnet sein. Zum Pumpen von flüssigem Beton können die Betonpumpenzylinder abwechselnd betätigt werden.

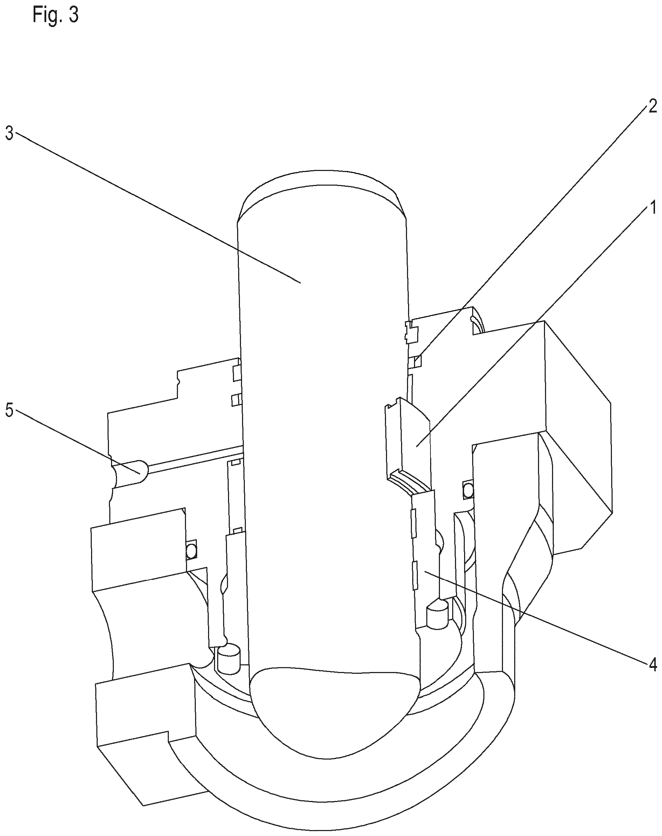

Figur 3 zeigt eine Teilschnittansicht einer erfind ungemäßen Dichtung für Betonpumpenzylinder mit wenigstens einer im Wesentlichen hohlzylinderförmigen Primärdichtung 1 und wenigstens einer verglichen damit kleiner ausgebildeten Sekundärdichtung 2. Die Primärdichtung 1 ist als mechanische Spaltdichtung ausgebildet. Die Spaltdichtung kann insbesondere eine schwimmende Spaltdichtung sein.

Das Innere der Primärdichtung 1 kann mit einer aus Bronze oder einer aus einem bronzeähnlichen Material gefertigten Auflage ausgeführt sein.

Die Primärdichtung 1 kann zwischen einer Kolbenstange 3 und einer Führung 4 angeordnet sein und dazu ausgebildet sein, sich zur Kolbenstange 3 und nicht zur Führung 4 insbesondere unter Druckbeaufschlagung zu zentrieren. Die Führung 4 kann einstückig gefertigt sein und/oder eine Durchführung umfassen, in der die Dichtungen 1, 2 angeordnet sind.

Zwischen der Außenseite der Primärdichtung 1 und der Innenseite der Führung 4 kann ein insbesondere ringförmiger Spalt vorgesehen sein, der eine Verformung und/oder eine Verschiebung der Primärdichtung 1 relativ zur Führung 4 ermöglicht.

Zwischen der Primärdichtung 1 und der Sekundärdichtung 2 kann eine Leckageleitung 5 vorgesehen sein, die zum Ableiten von Leckageöl ausgebildet sein kann. Die Leckageleitung kann insbesondere als Bohrung ausgebildet sein, die zwei oder mehr Abschnitte mit unterschiedlichen Durchmessern umfassen kann.

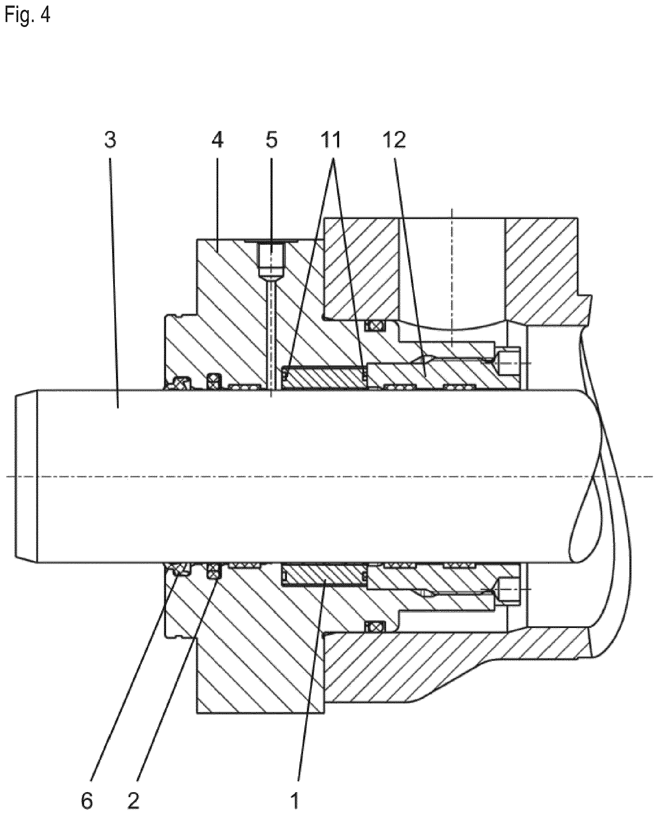

Die Sekundärdichtung 2 kann in axialer Richtung des Betonpumpenzylinders zwischen der Primärdichtung 1 und einem in der Figur 4 gezeigten Abstreifer 6 angeordnet sein.

Von den drei Komponenten Primärdichtung 1, Sekundärdichtung 2 und Abstreifer 6 kann die Primärdichtung 1 die größte radiale Erstreckung und/oder der Abstreifer 6 die geringste radiale Erstreckung aufweisen.

Die Primärdichtung 1 kann die größte axiale Erstreckung der genannten Komponenten aufweisen, die insbesondere mehr als 2-, 3- oder 4-mal größer ei kann, als die axiale Erstreckung der Sekundärdichtung 2.

Wie Figur 4 ferner entnehmbar ist, kann die Primärdichtung 1 wenigstens ein Dämpfungselement 11 umfassen. Insbesondere ist denkbar, dass genau zwei besonders bevorzugt identische und/oder hohlzylinderförmig bzw. ringförmig ausbildetet Dämpfungselemente 11 an der Primärdichtung 1 angeordnet sind. Es kann vorgesehen sein, dass die Stärke des ringförmig ausgebildeten Dämpfungselements 11 geringer, insbesondere halb so groß ist wie die Stärke der Primärdichtung 1.

Das Dämpfungselement 11 bzw. die Dämpfungselemente 11 können an oder innerhalb der axial äußeren Außenflächen der Primärdichtung 1 angeordnet sein und insbesondere innerhalb von entsprechenden Nuten angeordnet sein.

Das Dämpfungselement 11 kann in einem radial mittleren Bereich der axial äußeren Außenfläche der Primärdichtung 1 angeordnet sein.

Das Dämpfungselement 11 kann ein axiales und/oder radiales Spiel der Primärdichtung 1 relativ zur Führung 4, insbesondere bei gleichzeitiger Abdichtung der entsprechenden Kontaktbereiche, ermöglichen.

Die Innenseite der Primärdichtung 1 kann eine Beschichtung umfassen, welche eine Notlaufeigenschaft der gesamten Vorrichtung ermöglicht.

Die Primärdichtung 1 kann mittels einer Feststelleinrichtung 12 innerhalb der Führung 4 festgestellt sein. Die Feststelleinrichtung 12 kann im Wesentlichen hohlzylinderförmig ausgebildet sein und/oder mit der Führung 4 verschraub und/oder mittels von Schrauben gekoppelt sein.

Die Führung 4 kann einstückig mit einem Zylinder der Zylinder-Kolbenvorrichtung ausgebildet sein oder sie kann alternativ als von dem Zylinder unterschiedliches Bauteil ausgebildet sein, dass mit dem Zylinder insbesondere über einen Flansch koppelbar ist.

## Patentansprüche

1. Betonpumpe mit wenigstens einem Betonpumpenzylinder zum Pumpen von flüssigem Beton, wobei der Betonpumpenzylinder eine Dichtung mit wenigstens einer Primärdichtung (1) und wenigstens einer Sekundärdichtung (2) aufweist, **dadurch gekennzeichnet, dass** die Primärdichtung (1) eine mechanische Spaltdichtung ist.

2. Betonpumpe nach Anspruch 1, **dadurch gekennzeichnet, dass** die Spaltdichtung eine schwimmende Spaltdichtung ist.

3. Betonpumpe nach Anspruch 1 oder 2, **dadurch gekennzeichnet, dass** das Innere der Primärdichtung (1) mit einer aus Bronze oder einer aus einem bronzeähnlichen Material gefertigten Auflage ausgeführt ist.

4. Betonpumpe nach einem der vorhergehenden Ansprüche, **dadurch gekennzeichnet, dass** die Primärdichtung (1) zwischen einer Kolbenstange (3) und einer Führung (4) angeordnet ist und dazu ausgebildet ist, sich zur Kolbenstange (3) und nicht zur Führung (4) insbesondere unter Druckbeaufschlagung zu zentrieren.

5. Betonpumpe nach Anspruch 4, **dadurch gekennzeichnet, dass** zwischen der Außenseite der Primärdichtung (1) und der Innenseite der Führung (4) ein Spalt, insbesondere ein Ringspalt, vorgesehen ist.

6. Betonpumpe nach einem der vorhergehenden Ansprüche, **dadurch gekennzeichnet, dass** zwischen der Primärdichtung (1) und der Sekundärdichtung (2) eine Leckageleitung (5) vorgesehen ist.

7. Betonpumpe nach einem der vorhergehenden Ansprüche, **dadurch gekennzeichnet, dass** die Sekundärdichtung (2) in axialer Richtung des Betonpumpenzylinders zwischen der Primärdichtung (1) und einem Abstreifer (6) angeordnet ist.

8. Betonpumpe nach einem der vorhergehenden Ansprüche, **dadurch gekennzeichnet, dass** die Primärdichtung (1) wenigstens ein Dämpfungselement (11) umfasst.

## Claims

1. Concrete pump with at least one concrete pump cylinder for pumping liquid concrete, wherein the concrete pump cylinder comprises a seal with at least one primary seal (1) and at least one secondary seal (2), **characterised in that** the primary seal (1) is a mechanical gap seal.

2. Concrete pump according to claim 1, **characterised in that** the gap seal is a floating gap seal.

3. Concrete pump according to claim 1 or 2, **characterised in that** the interior of the primary seal (1) is realised with a plating made from bronze or from a material similar to bronze.

4. Concrete pump according to any one of the preceding claims, **characterised in that** the primary seal (1) is arranged between a piston rod (3) and a guide (4) and is designed to centre itself, in particular when pressure is applied, to the piston rod (3) and not to the guide (4).

5. Concrete pump according to claim 4, **characterised in that** a gap, in particular an annular gap, is provided between the outside of the primary seal (1) and the inside of the guide (4).

6. Concrete pump according to any one of the preceding claims, **characterised in that** a leakage line (5) is provided between the primary seal (1) and the secondary seal (2).

7. Concrete pump according to any one of the preceding claims, **characterised in that** the secondary seal (2) is arranged in an axial direction of the concrete pump cylinder between the primary seal (1) and a wiper (6).

8. Concrete pump according to any one of the preceding claims, **characterised in that** the primary seal (1) comprises at least one damping element (11).

## Revendications

1. Pompe à béton avec au moins un cylindre de pompe à béton pour pomper du béton liquide, dans laquelle le cylindre de pompe à béton présente un joint d'étanchéité avec au moins un joint d'étanchéité primaire (1) et au moins un joint d'étanchéité secondaire (2), **caractérisée en ce que** le joint d'étanchéité primaire (1) est un joint d'étanchéité mécanique à fente.

2. Pompe à béton selon la revendication 1, **caractérisée en ce que** le joint d'étanchéité à fente est un joint d'étanchéité à fente flottant.

3. Pompe à béton selon la revendication 1 ou 2, **caractérisée en ce que** l'intérieur du joint d'étanchéité primaire (1) est réalisé avec un appui confectionné à partir de bronze ou d'un matériau similaire au bronze.

4. Pompe à béton selon l'une quelconque des revendications précédentes, **caractérisée en ce que** le joint d'étanchéité primaire (1) est disposé entre une tige de piston (3) et un guidage (4) et est réalisé pour se centrer par rapport à la tige de piston (3) et non par rapport au guidage (4) en particulier sous l'action exercée par une pression.

5. Pompe à béton selon la revendication 4, **caractérisée en ce qu'**une fente, en particulier une fente annulaire, est prévue entre le côté extérieur du joint d'étanchéité primaire (1) et le côté intérieur du guidage (4).

6. Pompe à béton selon l'une quelconque des revendications précédentes, **caractérisée en ce qu'**un conduit de fuite (5) est prévu entre le joint d'étanchéité primaire (1) et le joint d'étanchéité secondaire (2).

7. Pompe à béton selon l'une quelconque des revendications précédentes, **caractérisée en ce que** le joint d'étanchéité secondaire (2) est disposé dans une direction axiale du cylindre de pompe à béton entre le joint d'étanchéité primaire (1) et un racleur (6).

8. Pompe à béton selon l'une quelconque des revendications précédentes, **caractérisée en ce que** le joint d'étanchéité primaire (1) comprend au moins un élément d'amortissement (11).
